# EUROPEAN PATENT APPLICATION

(11) **EP 0 664 185 A2**
(43) Date of publication of application: **26.07.1995**
(21) Application number: 95830006.3
(22) Date of filing: 13.01.1995
(51) Int. Cl.: B23Q 7/14

(54) **A wood machining centre**

(30) Priority: 21.01.1994 IT BO940016
(71) Applicant: SCM GROUP S.p.A., I-47037 Rimini (Forli) (IT)
(72) Inventor: Sacchi, Paride, I-47037 Rimini (IT)
(74) Representative: Lanzoni, Luciano

(57) **Abstract**

The work table (3) of a wood machining centre is composed of two identical half-sections (8, 9), supplied at one end with workpieces (1) conveyed in a direction (F) parallel to the longer axis of the table by respective independent infeed stations (4, 4a), and connected at the opposite end to similarly independent outfeed stations (5, 5a) by which the machined work is carried away in a direction (F1) parallel to the infeed. The table is surmounted by a frame (6) comprising a pair of fixed bearers (10, 11) respectively straddling the two opposite ends of the half-sections (8, 9) where these meet the infeed and outfeed stations (4, 4a, 5, 5a), and interconnected by an elevated beam (12) extending parallel with the table (3) and capable of movement along at least one of two mutually perpendicular axes (X, Y); the beam carries an overhung machining unit (7) capable of traversing along the other axis (Y, X) and able consequently to reach every part of the surface compassed by the two half-sections (8, 9), so that machining can proceed on either one of the half-sections while infeed/outfeed operations are completed on the other.

## Description

The present invention relates to a machine for working wood and similar materials, in particular a machine designed to perform boring and/or routing operations on workpieces with tools rotatable about vertical, horizontal or oblique axes, of the type widely referred to as a "machining centre".

In their current form, such machines consist in a load-bearing frame comprising a bed and, supported by the bed, a horizontal work table on which to position the pieces for machining (the workpieces in question include boards, battens and panels of wood or composition destined for batch production as parts for furniture manufacturing or industrial use). The work table is equipped with stops, push rods and reference elements distributed around the machining area and adjustable relative to the table in such a manner as to allow correct positioning of the workpieces on the horizontal surface.

The frame also comprises a rigid gantry structure with enclosed ends, of which the bridging member or beam extends longitudinally above the work table and serves to support an overhung machining unit mounted slidably on ways afforded by the selfsame member or beam; the machining unit is capable thus of movement along two mutually perpendicular axes (X - Y) and "exploring" the entire area compassed by the work table. Conventional machining units of this type generally comprise one or more spindle heads carrying one or a plurality of tools, each rotatable about a vertical, horizontal or oblique axis and capable in turn of movement along their respective axes so as to obtain the required depth of penetration into the work.

The infeed and subsequent outfeed of the workpieces to and from the table is effected along a direction transverse or normal to the main longitudinal axis of the machine: a solution dictated not least by the architecture of the gantry structure, with its enclosed ends.

Infeed/outfeed systems of this type pose a problem, however, relating to down time, or in the parlance of some authors, time which cannot be "hidden". The significance of such an expression is explained by the fact that time not strictly of an operational nature (and in the case of the machine specifically addressed by the present invention, the time needed to change the workpiece) tends in reality almost never to be "covered" by a parallel active step in which the tool engages the work; the drawback is even greater in numerically controlled machines of the latest generation, in which typical operating times for the tools are far shorter than the times taken to change the work. This means that machines currently utilizing a "transverse" infeed/outfeed system of the type in question cannot effectively operate in a manner such as will allow down times to be hidden, precisely by reason of a dimensional layout of the work table which dictates that the machining unit must pause to allow the removal of pieces already processed and the introduction and positioning of further workpieces, in particular when the length of the piece occupies more than 50% of the operating compass of the machine.

A further drawback betrayed by current machines of this type stems from a structural shortcoming: more exactly, it has been observed that with the mass of the machining unit set in motion along the ways and in relation to the inertia axis of the longitudinal member of the rigid gantry structure, torsional and dynamic effects can be generated in the structure both by the total displacement of this same mass and by the reaction of the tool in operation; these effects must of course create a certain instability in the structure and may produce a negative impact on the precision of the work.

Accordingly, the object of the present invention is to overcome the drawbacks mentioned above through the adoption of a wood machining centre featuring compact dimensions and precise operation, capable of high output, and designed principally to operate in conditions of zero down time achieved by virtue of the fact that the work is fed not in a direction transverse to the longitudinal axis of the machine, but rather in a direction parallel to the selfsame longitudinal axis of the machine.

The invention will now be described in detail, by way of example, with the aid of the accompanying drawings, in which:
- fig 1 illustrates a machining centre for wood in accordance with to the present invention, viewed schematically in plan from above and with certain parts omitted better to reveal others;
- fig 2 illustrates the work area of the machining centre according to the present invention, viewed schematically and in perspective from a standpoint opposite to that implicit in fig 1, with certain parts omitted better to reveal others;
- fig 3 illustrates an alternative embodiment of one element in the machining centre disclosed, viewed schematically in plan from above and with certain parts omitted better to reveal others.

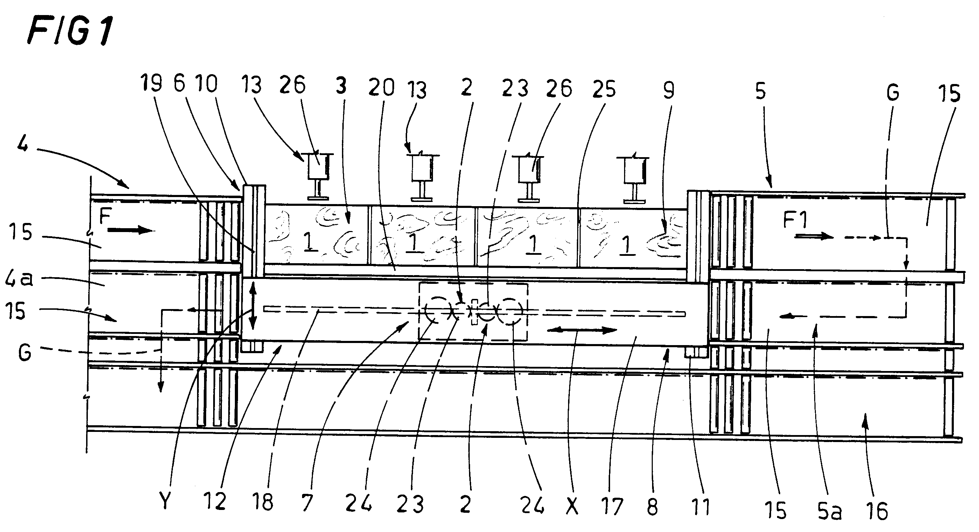

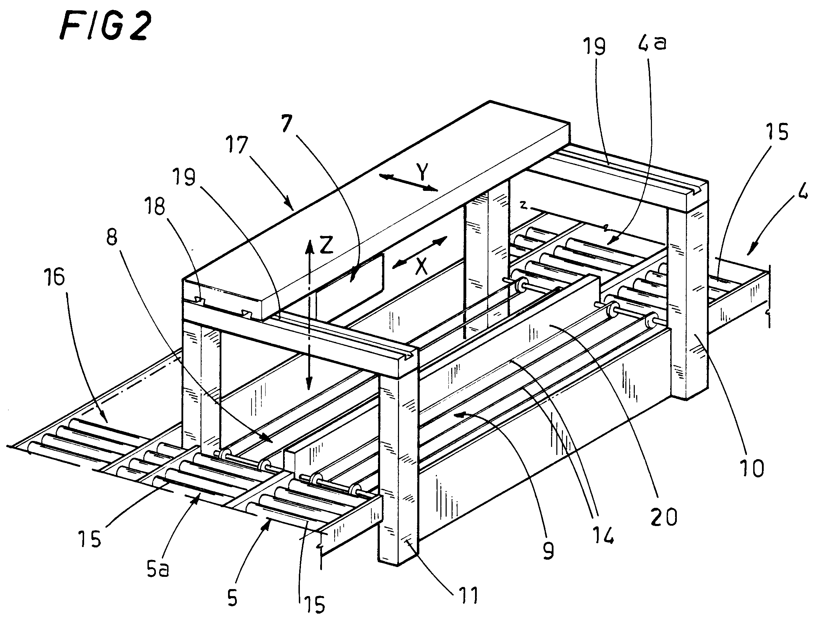

With reference in particular to figs 1 and 2 of the accompanying drawings, the invention relates to a machine such as can be used preferably for boring and/or routing workpieces in wood, denoted 1, and more exactly to a machining centre equipped with tools 2 which, in the example illustrated, operate with axes Z vertically disposed; the centre might equally well be equipped with tools rotating about oblique or horizontal axes, the tools being capable in any event of movement along these same axes to determine the depth of penetration into the work beneath.

Such machines comprise a horizontal table 3 serving to support the workpieces 1, which are directed into the work area by way of an infeed station 4, and removed by way of a relative outfeed station 5.

The work table 3 is surmounted by a frame 6 serving to support a machining unit 7 generally comprising one or more motorized spindles 23 of conventional embodiment, to which the aforementioned tools 2 are secured, and/or simple chucks accepting drill bits, together with relative dust extraction systems 24.

The machining unit 7 is capable of movement along two mutually perpendicular axes X and Y occupying a horizontal plane parallel with and compassing the entire surface of the work table 3 beneath.

In the example of the drawings, the work table 3 is divided into two identical half-sections, denoted 8 and 9, resulting in the creation of two independent machining and conveying lines; workpieces 1 advance along a direction F parallel with the longitudinal axis of the table 3, and are directed onto the two half-sections 8 and 9 at one end from respective independent infeed stations 4 and 4a, whilst at the opposite end, the two half-sections 8 and 9 connect with corresponding outfeed stations 5 and 5a by way of which the workpieces 1 are distanced likewise in a direction F1 parallel with the longitudinal axis of the table 3. The effect of such an arrangement, as discernible clearly in fig 1, is to create two independent and mutually non-interfering paths with entry, machining and exit stages along which the workpieces 1 are directed.

Still observing figs 1 and 2, it will be seen that the division of the table 3 into half-sections 8 and 9 is obtained by way of a vertical fence 20, and that each of the two half-sections is equipped in a substantially central area with means 13 by which to position the workpieces 1; such means 13 are of conventional type, consisting in stops 25 and push rods 26 (generally pneumatic actuators) distributed along each of the work areas created by the two half-sections. In addition, the positioning means comprise feeder-conveyor means 14 (likewise conventional and consisting, for example, in pairs of adjustable belts as indicated in fig 2) by which the workpieces 1 are admitted to and removed from the corresponding half-section 8 and 9.

The infeed and outfeed stations 4, 4a and 5, 5a are each embodied preferably as power driven conveyor tables 15 of conventional type, arranged in pairs one alongside the other and connected with no break in continuity to the relative extremities of the two half-sections 8 and 9. In addition, the infeed and outfeed stations 4, 4a and 5, 5a are all linked to a sorting lane 16 allowing distribution of the workpieces 1 before or after machining; the sorting lane 16 extends parallel with the two machining and conveying lines, interconnecting the areas occupied by the infeed and outfeed stations 4, 4a and 5, 5a, such that the machine can be connected with other stations to or from which the workpieces 1 might be directed.

Turning in greater detail to other component parts of the machine, the frame 6 is composed of a pair of fixed straddle bearers 10 and 11 positioned in mutual opposition and interposed between the ends of the work table 3 and the corresponding infeed and outfeed stations 4, 4a and 5, 5a, respectively.

The uprights of each straddle bearer 10 and 11 are disposed on opposite sides of the work table 3 at each respective end, thereby allowing an unhindered connection between the two half-sections 8 and 9 and the relative infeed and outfeed stations 4, 5, and 4a, 5a.

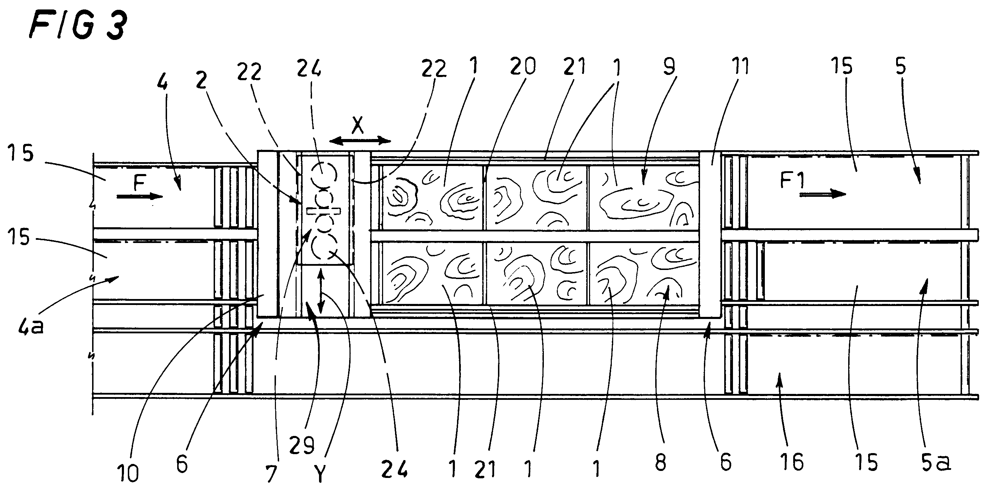

As indicated by figs 1 and 3, the top parts of the two straddle bearers 10 and 11 are interconnected by relative means of support 12 positioned over the work table 3 and rendered capable of movement along one of the two mutually perpendicular axes X and Y aforementioned (freedom of movement on one axis or the other will depend on which of the two preferred solutions is adopted, as explained in due course).

The machining unit 7 is mounted overhung to these same support means 12 with the ability to traverse over every part of the surface area compassed by the two half-sections 8 and 9 making up the work table 3, in such a manner that workpieces 1 can be machined on one half-section 8 or 9 at the same time as further workpieces undergo infeed and/or outfeed operations on the other half-section.

More exactly: in a first possible embodiment of the support means 12 (figs 1 and 2), use is made of a single horizontal beam 17 capable of movement along the 'Y' axis, and therefore transversely to the longitudinal axis of the work table 3, whilst the machining unit 7 traverses longitudinally along the beam 17, hence on the 'X' axis, coupled slidably to corresponding first ways 18 afforded by the beam 17 itself. To enable its translation along the Y axis, the beam 17 is mounted slidably to the horizontal members of the two straddle bearers 10 and 11 which in their turn afford respective second horizontal ways 19.

In a second solution illustrated (see fig 3), use is made of one or more horizontal beams (one such beam, denoted 29, is indicated by way of example) capable of movement along the 'X' axis, hence in a direction parallel to the longitudinal axis of the work table 3; to this end, the opposite ends of the beam 29 are coupled with relative mutually parallel third fixed ways 21 extending between and supported by the two straddle bearers 10 and 11. A machining unit 7 mounted internally of the beam 29 is coupled slidably to corresponding fourth guides 22 afforded by the second beam 29 itself, and rendered capable thus of movement along the 'Y' axis transversely to the work table 3.

The operation of the machining centre will now be described, starting from a situation in which both the half-sections 8 and 9 of the work table 3 are already filled with workpieces 1, each positioned against a relative stop 25 and clamped, whilst the beam 17 (here, the description refers to the first of the two solutions illustrated) is positioned over the half-section denoted 8.

In this situation, the machining unit 7 will come into operation and engage the workpieces 1 on the corresponding half-section 8, traversing along the beam 17 parallel with the X axis (see arrow X); the necessary movements along the Y axis are effected by translating the entire beam 17, and those along the Z axis by lowering and raising the tool (see arrow Z in fig 2).

With machining operations on this half-section 8 completed, the beam 17 traverses along the Y axis to bring the machining unit 7 over the remaining half-section 9 of the work table 3, whereupon the relative workpieces 1 will be machined in identical fashion. At the same time as machining proceeds on this half-section 9, the opposite half-section 8 is liberated of the workpieces 1 machined previously, by way of the outfeed station 5a, and prepared with further workpieces 1 brought in through the infeed station 4a (see arrow F).

In this way, the moment the workpieces 1 occupying the half-section 9 have been machined, the beam 17 is traversed and the machining unit 7 can proceed without any delay whatever to engage the new pieces already positioned on the half-section 8 opposite.

Naturally, this half-section 9 will now be emptied and refilled in the same way as the half-section 8 opposite, the machined workpieces 1 being removed by way of the outfeed station 5 and a further set of workpieces entering via the infeed station 4.

As regards the second embodiment illustrated, the operations effected thus far remain essentially the same, the only difference being in the positioning of the machining unit 7: movement along the X axis being effected by traversing the relative beam 29 along the fixed third ways 21, and movement along the Y axis by traversing the machining unit 7 along the fourth ways 22 internally of the beam 29.

The design of a wood machining centre (typically for boring or routing operations) according to the present invention will thus allow workpieces to be machined at speed, while maintaining high standards of precision and eliminating down time thanks to the particular structure of the work table.

In effect, the structure in question is based on the notion of parallelizing machining operations by the creation two independent lines, each capable of infeeding, machining and outfeeding a succession of workpieces without affecting the operation of the other, such that the tool can operate continuously and the time not effectively engaged in machining operations on either half of the work table can be "covered". A parallel lines structure of this type also enables a significant reduction in the overall dimensions of the machine, not obtainable hitherto in conventional designs.

The gantry type frame can carry one or a plurality of machining units and is arranged in such a way as to compass a field of action double the size of the stock boards or panels in order to allow operation on either half of the field at any time (in effect, with the spindle heads alternating between the two halves); at the same time, the frame itself remains compact in both of the solutions illustrated, and unaffected by torsional or dynamic stresses.

Underlining the validity of the present invention, items in wood can be bored/routed on both faces by adopting a loop type layout (see arrow G in fig 1) whereby workpieces machined on a first half-section of the table are removed by way of the respective outfeed station and then flipped over (through the agency of suitable means not shown in the drawings) directly onto the adjacent outfeed station serving the second half-section; this latter station now becomes an infeed station by which the overturned workpieces can be directed back onto the second half-section and machined immediately on the face opposite to that machined previously, without any further time and space being wasted.

An additional and decidedly pertinent advantage of the machining centre disclosed is that work of any given dimensions can be handled, including boards or panels of considerable surface area equivalent even to the sum of the two half-sections, albeit down time cannot be eliminated in this instance; wide boards and panels are positioned on the work table and guided faultlessly beneath the gantry, their entire surface area covered by the machining unit, without any need for recourse to special or non-standard machinery or equipment.

## Claims

**1)** A wood machining centre, in particular for boring and/or routing workpieces (1) utilizing tools (2) positioned above a horizontal work table (3) on which workpieces (1) received from at least one infeed station (4) are supported, and from which the selfsame workpieces are distanced by way of a relative outfeed station (5), further comprising a frame (6) and, mounted to the frame, a machining unit (7) carrying the tools (2) and capable of movement along two mutually perpendicular axes (X, Y) in such a way as to compass the entire surface of the work table (3),
characterized
- in that the work table (3) is composed of two identical half-sections (8, 9) supplied at one end with workpieces (1) transferred from respective independent infeed stations (4, 4a) in a direction (F) parallel to the longitudinal dimension of the table (3), and connected at the opposite end to corresponding independent outfeed stations (5, 5a) by way of which the selfsame workpieces (1) are removed likewise in a direction (F1) parallel to the longitudinal dimension of the work table (3);
- in that the frame (6) consists in at least one pair of fixed straddle bearers (10, 11) interposed respectively between the ends of the work table (3) and the corresponding infeed and outfeed stations (4, 4a, 5, 5a) and interconnected uppermost by support means (12), disposed parallel with and above the table (3) and capable of movement along at least one of the two mutually perpendicular axes (X, Y), to which the machining unit (7) is slidably mounted in an overhung position, capable thus of movement along the remaining axis (Y, X) and able consequently to reach every part of the surface compassed by the two half-sections (8, 9) of the work table (3), in such a way as will allow of machining workpieces (1) on one half-section (8 or 9) while simultaneously infeeding and/or outfeeding further workpieces (1) to and/or from the other half-section (9 or 8).

**2)** A machine as in claim 1, wherein each of the half-sections (8, 9) of the work table (3) is equipped with respective means (13) by which to position the workpieces (1), and with feeder-conveyor means (14) by which the workpieces (1) are carried onto and distanced from the relative half-section (8, 9).

**3)** A machine as in claim 1, wherein the independent infeed and outfeed stations (4, 4a, 5, 5a) consist in respective power driven conveyor tables (15) disposed one alongside another and connected with no break in continuity to the ends of the relative half-sections (8, 9), and in communication further with a sorting lane (16) extending parallel to the conveying direction and interconnecting the areas occupied by the infeed and outfeed stations (4, 4a and 5, 5a), of which the function is to effect a distribution of the workpieces (1) before or after machining.

**4)** A machine as in claim 1, wherein each straddle bearer (10, 11) comprises relative upright members disposed on opposite sides of the work table (3) at each respective end, in such a way as to allow an unhindered connection between each half-section (8, 9) and the relative infeed and outfeed stations (4, 4a, 5, 5a).

**5)** A machine as in claim 1, wherein support means (12) consist in a single horizontal beam (17) capable of movement along the axis (Y) disposed transversely to the longitudinal dimension of the table (3), and supporting at least one machining unit (7) coupled slidably with respective first ways (18) afforded by the beam (17) and capable thus of movement along the longitudinal axis (X) between the two ends of the beam (17), which in turn are coupled slidably with corresponding second ways (19) afforded by the elevated horizontal members of the respective straddle bearers (10, 11).

**6)** A machine as in claim 1, wherein support means (12) comprise at least one horizontal beam (29) capable of movement along the axis (X) disposed parallel to the longitudinal dimension of the work table (3), of which the ends are coupled slidably to relative fixed third ways (21) extending mutually parallel between and supported by the straddle bearers (10, 11), and of which the function is to carry at least one relative machining unit (7) coupled slidably to corresponding fourth guides (22) afforded by the beam (29) itself and capable thus of movement along the axis (Y) transverse to the work table (3).
